# DEMANDE DE BREVET EUROPEEN

(11) **EP 1 604 716 A1**
(43) Date de publication de la demande: **14.12.2005**
(21) Numéro de dépôt: 05356097.5
(22) Date de dépôt: 06.06.2005
(51) Int. Cl.: B01D 29/13, C02F 1/68, C02F 5/00

(54) **Dispositif de traitement chimique de l'eau, notamment de traitement anti-tartre**

(30) Priorité: 08.06.2004 FR 0406180
(71) Demandeur: Rime, 26120 Montelier (FR)
(72) Inventeur: Muel, Olivier, 69100 Villeurbanne (FR); Hebert, Christian, 26100 Romans (FR); Lin, Wenqiang, 69002 Lyon (FR); Perichon, Christian, 69230 Saint Genis Laval (FR)
(74) Mandataire: Maureau, Philippe

(57) **Abrégé**

Dispositif comportant une cuve cylindrique (2) à l'intérieur de laquelle est montée une cartouche cylindrique étanche (9) contenant des éléments (10) de traitement chimique. La cartouche (9) est entourée par une cartouche (13) de filtration des sédiments délimitant avec la cuve (2) et avec la cartouche (9) contenant les éléments de traitement chimique deux volumes annulaires (15, 16), le premier volume annulaire (15) servant à l'alimentation en eau de la cartouche de filtration (13) et le second volume annulaire (16) servant à l'alimentation de la cartouche (9) contenant les éléments (10) de traitement chimique, à partir de l'eau ayant traversé la cartouche de filtration, l'eau traversant la cartouche (9) sur toute sa longueur.

## Description

La présente invention a pour objet un dispositif de traitement chimique de l'eau, notamment de traitement anti-tartre.

Il est connu de réaliser un traitement chimique de l'eau, par exemple un traitement anti-tartre, ou un traitement inhibiteur de corrosion, en réalisant la dissolution progressive d'un certain nombre de produits chimiques dans l'eau, à très faible concentration. Dans le cas du traitement contre la formation de tartre, les produits chimiques dits inhibiteurs de tartre peuvent être constitués par des polyphosphates, des polyacrylates ou des polyphosphonates. Dans ces conditions, le carbonate de calcium (tartre) ne s'incruste pas dans les installations d'eau dans la mesure où l'eau a été préalablement traitée. La concentration dissoute est proportionnelle au temps de contact entre l'eau et le produit inhibiteur.

Il existe des dispositifs de traitement chimique du tartre comprenant une cuve cylindrique à l'intérieur de laquelle est montée une cartouche cylindrique contenant des éléments inhibiteurs de tartre, l'eau étant admise, à partir du circuit dans lequel elle circule, dans un volume annulaire compris entre la cuve et la cartouche, pénètre ensuite dans la cartouche, puis traverse celle-ci au contact des éléments inhibiteurs de tartre, pour sortir de la cartouche en direction du circuit de circulation d'eau.

Il existe parfois la nécessité de réaliser le traitement d'eau par filtration, par un principe mécanique utilisant un mediat filtrant, par exemple une toile à base de polyamide 6 (connu sous la marque Nylon), en vue de réaliser la rétention des sédiments contenus dans l'eau. Les caractéristiques techniques du mediat filtrant déterminent la finesse de la filtration, souvent exprimée en microns.

Il existe des produits de filtration se présentant sous la forme d'un filtre composé d'une cuve et d'une cartouche filtrante placée à l'intérieur de celle-ci. Si l'on veut réaliser un traitement chimique de l'eau ainsi qu'une retenue des sédiments, il convient aujourd'hui de monter en série sur le circuit de circulation d'eau successivement un filtre à sédiments et une unité anti-tartre.

Il en résulte une complexité de réalisation d'une telle installation, et par suite une augmentation du coût de celle-ci avec d'autres inconvénients relatifs notamment à l'encombrement nécessité par deux dispositifs, rendant parfois leur installation difficile lorsque la place est exiguë.

Le problème technique à la base de l'invention est donc de fournir un dispositif de traitement multifonctionnel.

A cet effet, le dispositif qu'elle concerne, du type comportant une cuve cylindrique à l'intérieur de laquelle est montée une cartouche cylindrique étanche contenant des éléments de traitement chimique, l'eau étant admise à partir du circuit dans lequel elle circule dans un volume annulaire entre la cuve et la cartouche, pénétrant ensuite dans la cartouche pour traverser celle-ci au contact des éléments de traitement chimique, puis sortant de la cartouche vers le circuit de circulation d'eau, la cartouche étant entourée par une cartouche de filtration des sédiments délimitant avec la cuve et avec la cartouche contenant les éléments de traitement chimique deux volumes annulaires, le premier volume annulaire servant à l'alimentation en eau de la cartouche de filtration et le second volume annulaire servant à l'alimentation de la cartouche contenant les éléments de traitement chimique, à partir de l'eau ayant traversé la cartouche de filtration est caractérisé en ce que l'entrée et la sortie de l'eau sont réalisées à une extrémité de la cuve et des cartouches, la cartouche contenant les éléments de traitement chimique comportant des ouvertures radiales à proximité de son extrémité opposée à celle situé du côté de l'entrée et de la sortie d'eau.

Cette installation est très compacte, puisque le filtre de rétention des sédiments et la cartouche contenant les éléments chimiques de traitement de l'eau sont montés de façon concentrique à l'intérieur de la même cuve.

La totalité du flux d'eau traverse l'élément filtrant afin de réaliser la rétention des sédiments, avant de passer dans la cartouche de traitement chimique. En outre, compte tenu de la structure du dispositif, la totalité du flux d'eau à traiter traverse la cartouche sur la totalité de sa longueur, ce qui améliore le traitement en fournissant une surface de traitement maximale.

Suivant une caractéristique importante de l'invention, la cartouche contenant les éléments de traitement chimique et la cartouche de filtration sont montées avec interposition de moyens assurant l'étanchéité du volume annulaire délimité par les deux cartouches, à ses extrémités.

Avantageusement, la cartouche de traitement chimique est fermée, à son extrémité supérieure par une grille de retenue des éléments de traitement chimique, cette grille étant en appui contre un épaulement de la cartouche de filtration, un joint, tel qu'un joint plat étant disposé entre la cartouche de traitement chimique et la cartouche de filtration.

Les éléments de traitement chimique de l'eau peuvent être constitués par des éléments inhibiteurs de tartre, ou par d'autres éléments de traitement chimique, tels que des éléments inhibiteurs de corrosion, ou par une combinaison de tels éléments, par exemple un mélange d'éléments inhibiteurs de tartre et d'éléments inhibiteurs de corrosion.

Il est ainsi possible dans une telle hypothèse de réaliser plusieurs traitements chimiques simultanément, en obtenant à la sortie du dispositif une eau qui est traitée chimiquement et clarifiée du fait de la rétention de particules sur la cartouche filtrante.

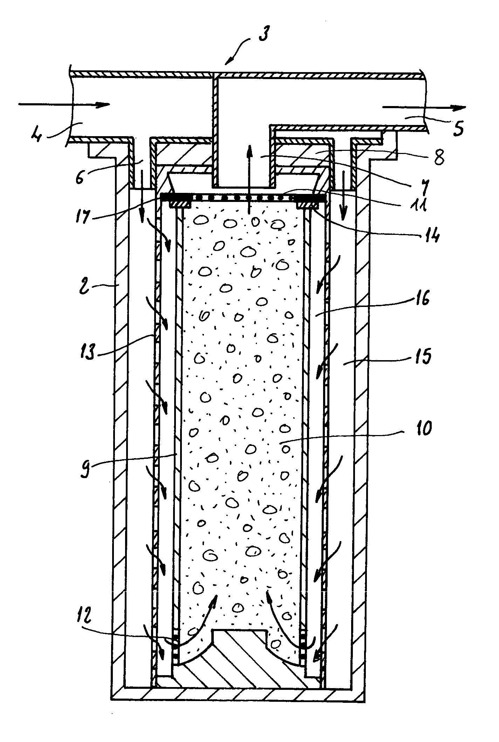

De toute façon l'invention sera bien comprise à l'aide de la description qui suit, en référence à la figure unique du dessin schématique annexé, représentant à titre d'exemple non limitatif, une forme d'exécution de ce dispositif vu en coupe longitudinale.

Le dispositif selon l'invention comprend une cuve cylindrique 2 dont une extrémité est ouverte. Cette cuve cylindrique est réalisée par exemple en matière synthétique, pouvant être opaque ou transparente. Cette cuve 2 est fermée par un couvercle 3. Le couvercle 3 comprend une entrée d'eau 4 et une sortie d'eau 5, pouvant être raccordées à des tubulures. L'entrée d'eau 4 est reliée à une embouchure 6 de distribution d'eau à proximité de la paroi extérieure de la cuve 2, tandis que la sortie 5 est reliée à un canal de reprise d'eau 7 disposé en position centrale.

Au couvercle 3 est associé par l'intermédiaire d'un bouchon 8 entourant le canal 7 de reprise d'eau une cartouche cylindrique étanche 9 contenant des éléments 10 inhibiteurs de tartre, de rouille ou d'autres éléments de traitement chimique de l'eau. Cette cartouche 9 comporte une paroi pleine sur sa hauteur, avec ménagement d'ouvertures radiales 12 en partie basse. Cette cartouche 9 cylindrique est elle-même logée à l'intérieur d'une cartouche cylindrique 13, avec réalisation de l'étanchéité entre les cartouches 9 et 13, du côté du couvercle 3, par l'intermédiaire d'un joint plat 14 disposé entre la cartouche 9 et le bord d'une grille 11 de retenue des éléments de traitement chimique. Cette grille 11 prend appui sur un épaulement 17 de la cartouche 13. La paroi périphérique de la cartouche 13 est constituée sur une partie importante de sa hauteur par un mediat filtrant.

En pratique, la cuve et les deux cartouches délimitent un premier volume annulaire 15 situé entre la cuve 2 et la cartouche filtrante 13, et un second volume annulaire 16 situé entre les cartouches filtrantes 13 et 9. D'un point de vue pratique, de l'eau est amenée à partir de l'entrée 4 dans le volume annulaire extérieur 15, et traverse le mediat filtrant constitué par la cartouche filtrante 13, pour pénétrer dans le volume annulaire 16. Les particules solides contenues dans le liquide sont retenues sur la cartouche filtrante 13. L'eau libérée des sédiments pénètre par l'ouverture 12 à la partie inférieure de la cartouche 9, puis traverse les éléments inhibiteurs de tartre 10 au contact desquels elle subit un traitement chimique, par dissolution de ces éléments, avant de gagner la sortie 5 et rejoindre le circuit dans lequel circule l'eau, après avoir traversé la cartouche sur toute sa longueur. A la sortie du dispositif, l'eau est à la fois clarifiée et chargée en inhibiteurs de tartre, évitant ainsi l'incrustation de dépôt de carbonate de calcium ou tartre dans l'installation.

Comme il ressort de ce qui précède, l'invention apporte une grande amélioration à la technique existante en fournissant un appareil de traitement d'eau de structure compacte, et possédant une pluralité de fonctions.

Comme il va de soi, l'invention ne se limite pas à la seule forme d'exécution de ce dispositif, décrite ci-dessus à titre d'exemple, elle en embrasse au contraire toutes les variantes de réalisation demeurant dans le cadre des revendications.

## Revendications

1. Dispositif de traitement chimique de l'eau, notamment de traitement anti-tartre, du type comportant une cuve cylindrique (2) à l'intérieur de laquelle est montée une cartouche cylindrique étanche (9) contenant des éléments (10) de traitement chimique, l'eau étant admise à partir du circuit dans lequel elle circule dans un volume annulaire (15) entre la cuve (2) et la cartouche (9), pénétrant ensuite dans la cartouche (9) pour traverser celle-ci au contact des éléments (10) de traitement chimique, puis sortant de la cartouche vers le circuit de circulation d'eau, la cartouche (9) étant entourée par une cartouche (13) de filtration des sédiments délimitant avec la cuve (2) et avec la cartouche (9) contenant les éléments de traitement chimique deux volumes annulaires (15, 16), le premier volume annulaire (15) servant à l'alimentation en eau de la cartouche de filtration (13) et le second volume annulaire (16) servant à l'alimentation de la cartouche (9) contenant les éléments (10) de traitement chimique, à partir de l'eau ayant traversé la cartouche de filtration, **caractérisé en ce que** l'entrée (4) et la sortie (5) de l'eau sont réalisées à une extrémité de la cuve (2) et des cartouches (9, 13), la cartouche (9) contenant les éléments de traitement chimique comportant des ouvertures radiales (12) à proximité de son extrémité opposée à celle situé du côté de l'entrée (4) et de la sortie (15) d'eau.

2. Dispositif selon la revendication 1, **caractérisé en ce que** la cartouche (9) contenant les éléments (10) de traitement chimique et la cartouche de filtration (13) sont montées avec interposition de moyens (14) assurant l'étanchéité du volume annulaire délimité par les deux cartouches (9, 13), à ses extrémités.

3. Dispositif selon l'une des revendications 1 et 2, **caractérisé en ce que** la cartouche (9) de traitement chimique est fermée, à son extrémité supérieure par une grille (11) de retenue des éléments (10) de traitement chimique, cette grille étant en appui contre un épaulement de la cartouche de filtration (13), un joint (14), tel qu'un joint plat étant disposé entre la cartouche de traitement chimique (9) et la cartouche de filtration (13).

4. Dispositif selon l'une des revendications 1 à 3, **caractérisé en ce que** les éléments (10) de traitement chimique sont constitués par des éléments inhibiteurs de tartre.

5. Dispositif selon l'une des revendications 1 à 3, **caractérisé en ce que** les éléments de traitement chimique sont constitués par des éléments inhibiteurs de corrosion.

6. Dispositif selon l'une des revendications 1 à 3, **caractérisé en ce que** les éléments de traitement chimique sont constitués par un mélange d'éléments inhibiteurs de tartre et d'éléments inhibiteurs de corrosion.
